# EUROPEAN PATENT SPECIFICATION

(11) **EP 0 977 488 B1**
(45) Date of publication and mention of the grant of the patent: **18.02.2004**
(21) Application number: 98917789.4
(22) Date of filing: 21.04.1998
(51) Int. Cl.: A23C 19/05, A23C 19/028

(54) **METHOD FOR THE PRODUCTION OF CHEESE OF THE HALF HARD TYPE**
VERFAHREN ZUR HERSTELLUNG VON HALBHARTKÄSE
PROCEDE DE PRODUCTION D'UN FROMAGE A PATE MI-DURE

(30) Priority: 25.04.1997 NL 1005906
(43) Date of publication of application: 09.02.2000
(73) Proprietor: CAMPINA MELKUNIE B.V., NL-5301 LB Zaltbommel (NL)
(72) Inventor: AKKERMAN, Jan, Coen, NL-5231 GD Den Bosch (NL)
(74) Representative: du Pont, Jeroen
(86) International application number: PCT/NL1998/000221
(87) International publication number: WO 1998/048636

(56) References cited:
- FR-A- 2 125 137
- FR-A- 2 252 057
- GB-A- 1 438 533
- GB-A- 1 540 208
- US-A- 3 988 481
- US-A- 4 355 048
- P. DE KONING: "Comparison of proteolysis in a low-fat semi-hard type of cheese manufactured by standard and by ultrafiltration techniques" NETHERLANDS MILK AND DAIRY JOURNAL., vol. 35, 1981, pages 35-46, XP002032354 WAGENINGEN NL
- H. GOUD DRANGE: "Utilisation de nouvelles membranes minérales d'ultrafiltration pour la fabrication de fromages du type Saint-Paulain" LA TECHINIQUE LAITI RE, no. 950, 1981, pages 7-13, XP002072958
- M. LUCISANO: "Studies on coagulation of milk ultrafiltration retentates" MILCHWISSENSCHAFT, vol. 40, no. 10, 1985, pages 600-604, XP002072959 MUNCHEN DE

## Description

The present invention in the first place relates to a method for the production of cheese of the half hard type from milk in a conventional manner, at least comprising the steps of:
- coagulating the milk;
- cutting the curd obtained;
- separating off the whey;
- pressing the curd in a mould;
- treating the thus obtained cheese with brine.

In cheesemaking, starter and rennet are added to milk in order to produce curd. This curd is cut, the whey formed is separated off and the remaining curd is pressed to give cheeses, generally in cheese moulds. Lactose present in the milk, when this is not separated off from the curd, can be completely converted into lactic acid by the starter, which will result in a very acid cheese. The lactose content of the curd, together with any buffering agent in the cheese will therefore determine the final pH of the cheese and therefore has an important influence on the flavour and consistency of the cheese.

In current cheesemaking methods the lactose content is often reduced by adding water to the cut whey/curd mixture. This reduces the lactose concentration in the whey around the curd particles, so that a concentration gradient between the lactose in the curd particles and the whey arises. Hereby part of the lactose diffuses from the curd particles into the whey. This so-called "washing" is an undesirable and inaccurate method for controlling the lactose content. It is furthermore undesirable that the whey volume is increased in connection with further processing or possible discharge the whey.

By cutting of the curd, in the curd a process of driving out water occurs, which is called syneresis in the prior art. This driving out of water accelerates at elevated temperature and continues for an extended period of time. In other words the longer the washing takes place, the more water will be driven out of the curd by syneresis. The consequence thereof is that the moisture content of the final cheese decreases.

The present invention aims to alleviate the above disadvantages and is to that end characterized in that milk with a reduced lactose content is used which is obtainable by subjecting milk to ultrafiltration followed by nanofiltration or reversed osmosis and that after cutting of the curd washing is omitted.

The advantage of the use of milk with a reduced lactose content is that washing of the curd can be omitted and that cheese with a desired and adjustable moisture content can be produced.

In the prior art the preparation of cheese with high moisture content was only possible while maintaining high lactose contents in the curd and therefore a low pH in the final cheese by the formation of lactic acid.

Methods for the production of lactose-free milk by ultrafiltration followed by reversed osmosis are generally known. In this respect reference is made to FR-A-2 125 137, wherein a method for the preparation of lactose-free milk is taught by application of ultrafiltration and reverse osmosis. In this reference as well as in other references from the prior art the absence of lactose in the milk is connected with diet products for diabetics. The lactose-free milk obtained is used for specific milk drinks, yoghurt and fresh cheeses, such as feta and cream cheese and such. These cheese types contain with conventional preparation indeed substantial lactose contents. It will be clear that cheeses of the half hard type which are prepared by the conventional method according to the prior art substantially do not comprise lactose. Therefore in the prior art there was no incentive whatsoever to prepare cheeses of the half hard type using such lactose poor milk.

Using the method according to the invention the production capacity of the average cheese factory can be increased by about 25%. Further the whey flow is substantially smaller and on the whole substantially less water is necessary. Hereby also substantially less waste water is formed with associated reduced reprocessing cost.

In this respect reference is made to the prior art a.o. "Netherland Milk and Dairy Journal", vol. 35, p.35-46, (1981), FR-A-2 252 057, "La Technique Laitiere", no. 950, p.7-13, (1981), US-A-4 355 048, US-A-3 988 481. All these references disclose the production of semi-hard cheese by using milk with a reduced lactose content. These methods however are not considered to be conventional cheese making methods. The object there is to include as much whey proteins (serum proteins) in the cheese as possible. The milk is concentrated by ultrafiltration followed by water addition and again ultrafiltration (diafiltration). Thereafter the concentrate is heated in a heat-exchanger and filled into moulds. In other words water is removed from milk not by separating off the whey.

According to the invention preferably the lactose content of the milk used is less than 4% by weight and more preferably less than 3% by weight.

The invention further provides cheese of the half hard type, being obtainable by the method according to the invention.

Cheese production is a partially batch process, as certain amounts of milk are coagulated, after which the cut curd is separated off from the whey and pressed in moulds. From one batch of curd sequentially a plurality of cheese is pressed, such that between the first and the final filled and pressed cheese in practice can be 20-30 min. This means that with the conventional cheese preparation the lactose separation by diffusion and syneresis continues during this period and therefore influences the flavour of the cheese. With the method according to the invention however substantially only syneresis occurs, which means that the cheese prepared according to the invention will have a constant mineral content per batch of curd. In other words the curd for one cheese from a curd batch has not been washed for a longer period than the curd for another cheese from the same curd batch, as with the present invention washing no longer occurs.

Preferably the moisture content of the cheese is more than 50% by weight. According to the invention it is possible to prepare cheese with a very high moisture content, however with a good flavour, without excessive acidity.

It will be clear that the different conventional processing steps of the milk and intermediate products of the cheese production can be performed, provided that the advantages obtained by the method according to the invention are not substantially affected. For example the starting milk can be subjected to common pretreatments like sterilisation, pasteurisation, cream separation etc.

In the following a number of examples will be given of the method according to the invention for the production of cheese by using milk with a reduced lactose content.

### Example 1: Production of Maasdam cheese

Raw milk (4.5 wt% lactose) was heated in a heat exchanger to 40EC. The milk was separated into cream and skim milk by centrifuging. The skim milk was thermized for 10 s at 65EC, and drawn off into the regenerative section of the heat exchanger at 50EC. The proteins in the milk were concentrated by a factor of 2.5 with a Tuchenhagen UF installation with a 5 kDa membrane.

The lactose in the UF permeate was then separated off in a Filmtec NF installation with a 0.5 kDa membrane at 50EC and 20 bar. The NF permeate was cooled to 4EC, as were also the UF retentate and cream streams.

The NF permeate, UF permeate, cream and thermized milk streams were controlled in such a way, via measurements with an infra-red spectrophotometer with a Foss Electric Multicomponent Monitoring System, that the following cheese milk composition was obtained: 3.8% protein, 3.5% fat and 2.7% lactose.

The cheese milk was pasteurized for 15 s at 72EC and put into a curd production tank at 30EC. 0.6% starter was added during the filling of the curd production tank. 22 ml of calf rennet and 30 ml of calcium chloride were then added per 100 1 of milk. The components for the propionic acid culture and lysozyme (an enzyme inhibiting undesired bacterial growth) were also added.

After coagulation the resultant gel was cut, as a result of which the whey began to come out and the curd particles contracted. After 20 min of cutting a considerable quantity of whey had been formed. The stirrer was stopped and the curd particles then settled out. After 2 min the whey sieve was lowered, and drawing-off of the whey was commenced. Drawing-off was continued until a residual volume which was 55% of the original volume was reached.

The whey/curd was heated to 35EC with the thermal jacket of the curd production tank. 3 g of saltpetre was then added, followed by stirring for a further 25 min. The whey/curd was then put into a Casomatic draining unit.

12 kg curd blocks were placed in round moulds. The curd blocks were pressed for 1.5 hours. The lids of the moulds were lifted and the cheese remained for a further 30 min in the mould, after which sufficient acidification was obtained. The cheeses were then removed from the moulds and immersed in brine. The brine comprises a concentrated NaCl solution (about 18 w/w%) with a temperature of about 13 EC. The brine cools the cheese, the brine withdraws moisture from the cheese. Further salt diffuses into the cheese. The salt content on a dry solids basis comprises about 2,5% after brine treatment.

The cheese remained in the brine for 2 days. The cheese was then stored at 13EC and after two weeks at 18EC. During storing the cheese was turned over frequently and plastified. After seven weeks the cheese started to puff up and the cheese was ready for sale. The product tasted like an excellent Maasdam cheese should taste; somewhat nutty, delicate.

### Example 2: Production of Gouda cheese

Gouda cheese was made by heating raw milk (4.6 wt% lactose) to 40EC and centrifuging. The skim milk was thermized and subjected at 50EC to ultrafiltration in a Tuchenhagen installation with a 5 kDa membrane, to a concentration factor of 2.5.

The lactose in the UF permeate was concentrated in a PCI-Systems RO installation with a 0.1 kDa membrane at 50EC and a pressure of 40 bar. After cooling to 4EC by means of a heat exchanger, the RO permeate, UF retentate, cream and thermized whole milk streams were brought together in the desired proportions in a mixing tank with the aid of flowmeters. In this way cheese milk was obtained with 3.8 wt% protein, 4.1 wt% fat and 3.4 wt% lactose.

At the start of the cheesemaking process this milk was pasteurized for 15 s at 72EC. The milk was cooled to 30EC in the regenerative section of the pasteurizer and then pumped into the curd production tanks. 0.6% starter was added during filling. 20 ml of calf rennet and 30 ml of calcium chloride solution were added per 100 l of milk.

The milk coagulated in 30 min, after which the gel was cut. Whey was released from the curd as a result of the cutting. After 25 min a large amount of whey had been released from the curd. The blades were stopped and whey was drawn off with the whey sieve to 55% of the original volume and saltpetre was added. The curd was set in motion again by stirring with the blades. The thermal jacket of the curd production tanks was filled with hot water, as a result of which the temperature of the curd rose to 35EC. After 20 min the whey/curd mixture was pumped into the buffer tank of a Casomatic drainage unit, and it was distributed in the pipes thereof. The whey and curd were separated in the Casomatic pipes.

The curd was put into round moulds. When the last cheese from a curd production tank had been put into a mould, all the curd blocks were pressed at the same time. The total pressing time was 1.5 hours. The lids of the moulds were then lifted and the cheeses were left in the mould for a further half hour. The cheeses were lifted out of the mould and immersed in brine. The cheese remained in the brine for four days. After brining, the cheeses were turned and coated with plastic. This treatment was repeated every two days for 14 days. The cheese was then taken to a commercial warehouse. The cheese ripened an additional 14 days. The cheese was then ready for consumption, the product had a typical Gouda young flavour, fresh, somewhat acid.

## Claims

1. Method for the production of cheese of the half hard type from milk in a conventional manner, at least comprising the steps of:
- coagulating the milk;
- cutting the curd obtained;
- separating off the whey;
- pressing the curd in a mould;
- treating the thus obtained cheese with brine, **characterized in that** milk with a reduced lactose content is used which is obtainable by subjecting milk to ultrafiltration followed by nanofiltration or reversed osmosis, and that after cutting of the curd washing is omitted.

2. Method according to claim 1, **characterized in that** the lactose content of the milk used is less than 4% by weight.

3. Method according to claim 2, **characterized in that** the lactose content of the milk used is less than 3% by weight.

4. Cheese of the half hard type, obtainable by the method according to one or more of claims 1-3.

5. Cheese according to claim 4, **characterized in that** the moisture content of the cheese is more than 50% by weight.

## Patentansprüche

1. Verfahren zur Herstellung von Halbhartkäse aus Milch in herkömmlicher Weise, wenigstens umfassend die folgenden Schritte:
- Koagulieren der Milch;
- Schneiden des erhaltenen Weichkäses;
- Abtrennen der Molke;
- Pressen des Weichkäses in eine Form;
- Behandeln des so erhaltenen Käses mit Salzlake,
**dadurch gekennzeichnet, dass** Milch mit einem reduzierten Laktosegehalt verwendet wird, was dadurch erhalten wird, dass Milch einer Ultrafiltration gefolgt von einer Nanofiltration oder einer Umkehrosmose unterworfen wird, und dass das Waschen nach dem Schneiden des Weichkäses weggelassen wird.

2. Verfahren nach Anspruch 1, **dadurch gekennzeichnet, dass** der Laktosegehalt der verwendeten Milch weniger als 4 Gewichtsprozent ist.

3. Verfahren nach Anspruch 2, **dadurch gekennzeichnet, dass** der Laktosegehalt der verwendeten Milch weniger als 3 Gewichtsprozent ist.

4. Halbhartkäse, erhältlich durch das Verfahren nach ein oder mehreren der Ansprüche 1 bis 3.

5. Käse nach Anspruch 4, **dadurch gekennzeichnet, dass** der Feuchtigkeitsgehalt des Käses mehr als 50 Gewichtsprozent ist.

## Revendications

1. Procédé de fabrication de type conventionnel d'un fromage du genre à pâte mi-dure à partir de lait, comprenant au moins les étapes de :
- coagulation du lait ;
- découpe du caillé obtenu ;
- séparation du petit-lait ;
- pressage du caillé dans un moule ;
- traitement du fromage ainsi obtenu par de la saumure,
**caractérisé en ce qu'**il y est employé du lait avec teneur en lactose réduite lequel est obtenu en soumettant le lait à une ultrafiltration suivie d'une nanofiltration ou d'une osmose inverse, et **en ce que** le lavage après découpe du caillé est omis.

2. Procédé selon la revendication 1, **caractérisé en ce que** la teneur en lactose du lait employé est inférieure à 4% en poids.

3. Procédé selon la revendication 2, **caractérisé en ce que** la teneur en lactose du lait employé est inférieure à 3% en poids.

4. Fromage du genre à pâte mi-dure, pouvant être obtenu par le procédé selon l'une ou plus des revendications 1 à 3.

5. Fromage selon la revendication 4, **caractérisé en ce que** la teneur en humidité du fromage est inférieure à 50% en poids.
